(19) Europäisches Patentamt
European Patent Office
Office européen des brevets

(11) **EP 4 733 835 A1**

(12) **EUROPEAN PATENT APPLICATION**
published in accordance with Art. 153(4) EPC

(43) Date of publication:
**29.04.2026 Bulletin 2026/18**

(21) Application number: **24865825.4**

(22) Date of filing: **11.09.2024**

(51) International Patent Classification (IPC):
*G02F 1/1339* (2006.01)    *G02F 1/1337* (2006.01)
*G02F 1/1343* (2006.01)    *G02F 1/1335* (2006.01)

(52) Cooperative Patent Classification (CPC):
**G02F 1/1335; G02F 1/1337; G02F 1/1339; G02F 1/1343**

(86) International application number:
**PCT/KR2024/013770**

(87) International publication number:
**WO 2025/058386 (20.03.2025 Gazette 2025/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.09.2023 KR 20230120917**

(71) Applicant: **LG Chem, Ltd.**
**Seoul 07336 (KR)**

(72) Inventors:
• **YOU, Jung Sun**
  **Daejeon 34122 (KR)**
• **LEE, Beom Jin**
  **Daejeon 34122 (KR)**
• **HUH, Doo Young**
  **Daejeon 34122 (KR)**
• **SEO, Han Min**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **SUBSTRATE FOR OPTICAL DEVICE**

(57)    [Summary]
    The present application relates to a substrate for an optical device. The present application can provide a substrate for an optical device maintaining a cell gap between an upper substrate and a lower substrate of a liquid crystal cell appropriately, having excellent attachment force between the upper substrate and the lower substrate, and having excellent visibility by improving a sparkling phenomenon and a rainbow phenomenon.

[Figure 1]

# Description

[Technical Field]

This application relates to a substrate for an optical device.

This application claims the benefit of priority based on Korean Patent Application No. 10-2023-0120917 dated September 12, 2023, the disclosure of which is incorporated herein by reference in its entirety.

[Background Art]

For long-term stability and large-area scalability of a liquid crystal cell using flexible substrates, it is important that a cell gap is maintained between upper and lower substrates and adhesion force is imparted between the upper and lower substrates. To maintain the cell gap between the upper substrate and the lower substrate, a spacer may be used, and the spacer has a column shape or a partition wall shape (Non-Patent Document 1: "Bonding of Two Plastic Substrates for Flexible LCDs" SID Symposium Digest, 38, pp. 653-656 (2007)).

[Disclosure]

[Technical Problem]

It is a problem of the present application to provide a substrate for an optical device maintaining a cell gap between an upper substrate and a lower substrate of a liquid crystal cell appropriately, having excellent attachment force between the upper substrate and the lower substrate, and having excellent visibility by improving a sparkling phenomenon and a rainbow phenomenon.

[Technical Solution]

The present application relates to a substrate. The substrate is a substrate for an optical device, which may be used as a substrate for manufacturing an optical device.

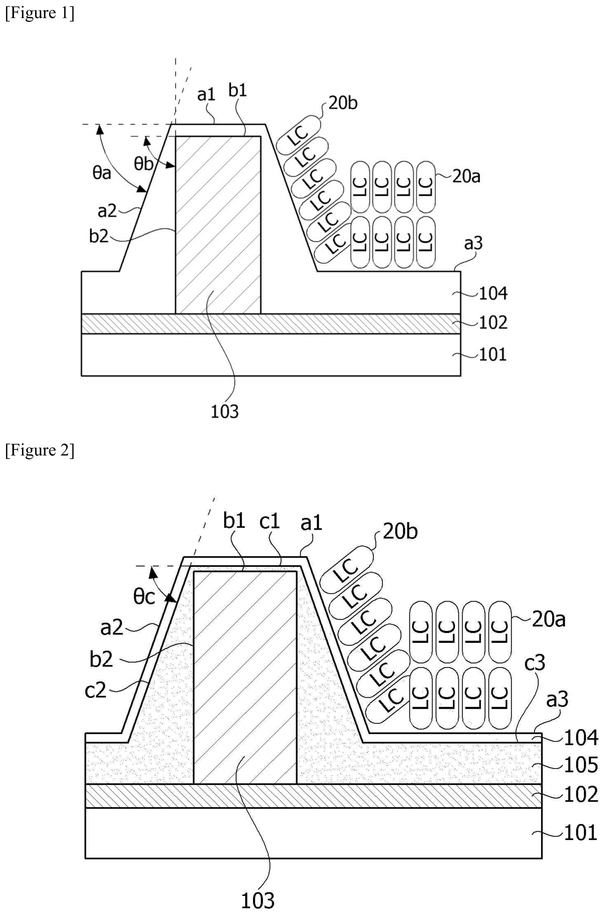

Figures 1 to 3 exemplarily show a substrate for an optical device. The substrate may comprise a base material layer (101), a spacer (103), and an alignment film (104). The substrate may comprise the spacer on the base material layer, and may comprise the alignment film on the spacer. That is, the spacer may exist between the base material layer and the alignment film.

As the base material layer, for example, an inorganic film such as a glass film, a crystalline or amorphous silicon film or a quartz or ITO (indium tin oxide) film, or a polymer film, and the like may be used, and in terms of implementing flexible elements, a polymer film may be used.

In one example, the base material layer may be a polymer film. As the polymer film, TAC (triacetyl cellulose); COPs (cyclo olefin copolymers) such as norbornene derivatives; PMMA (poly(methyl methacrylate)); PC (polycarbonate); PE (polyethylene); PP (polypropylene); PVA (polyvinyl alcohol); DAC (diacetyl cellulose); PAc (polyacrylate); PES (poly ether sulfone); PEEK (polyetheretherketon); PPS (polyphenylsulfone), PEI (polyetherimide); PEN (Polyethylenenaphthalate); PET (polyethyleneterephtalate); PI (polyimide); PSF (polysulfone); PAR (polyarylate) or an amorphous fluororesin, and the like may be used, without being limited thereto. In the base material layer, a coating layer of gold, silver, or a silicon compound such as silicon dioxide or silicon monoxide, or a functional layer such as an antireflection layer may also be present as needed.

The base material layer may have a thickness in a range of 10 $\mu$m to 1,000 $\mu$m. Specifically, the thickness of the base material layer may be 20 $\mu$m or more, 40 $\mu$m or more, 60 $\mu$m or more, 80 $\mu$m or more, or 100 $\mu$m or more, and may be 900 $\mu$m or less, 800 $\mu$m or less, 700 $\mu$m or less, 600 $\mu$m or less, 500 $\mu$m or less, or 400 $\mu$m or less.

In one example, the base material layer may be an optically anisotropic film. A film having such optical anisotropy is also usually anisotropic in mechanical properties, and it is possible to provide a liquid crystal cell or optical device having superior durability and the like by utilizing such anisotropy. When the optically anisotropic film is simultaneously applied to the first and second base material layers as described below, it may be included in the liquid crystal cell or optical device so that the slow axis of the first base material layer and the slow axis of the second base material layer are parallel or perpendicular to each other. In this specification, the fact that the A-axis and the B-axis are perpendicular may mean that the angle formed by the A-axis and the B-axis is in a range of about 80 degrees to 100 degrees, about 85 degrees to 95 degrees, about 87 degrees to 93 degrees, or about 89 degrees to 91 degrees, or approximately 90 degrees. In this specification, the fact that the A-axis and the B-axis are parallel may mean that the angle formed by the A-axis and the B-axis is in a range of about 0 degrees to 10 degrees, about 0 degrees to 5 degrees, about 0 degrees to 3 degrees, or about 0 degrees to 1 degree, or approximately 0 degrees.

In one example, the base material layer may each be a polymer film having an in-plane phase difference value of 4,000 nm or more for light with a wavelength of 550 nm. The in-plane phase difference value may be specifically, 5,000 nm or more, 6,000 nm or more, 7,000 nm or more, 8,000 nm or more, or 9,000 nm or more, and may be 50,000 nm or less, 40,000 nm or less, 30,000 nm or less, 20,000 nm or less, 18,000 nm or less, 16,000 nm or less, 15,000 nm or less, or 12,000 nm or less. Through this, it may be advantageous to provide a liquid crystal cell or optical device without optical defects such as a rainbow phenomenon.

In this specification, the in-plane phase difference may be defined by Equation 1 below.

[Equation 1]

$$Rin = (nx-ny) \times d$$

In Equation 1, Rin is the in-plane phase difference, nx is the refractive index of the polymer film in the slow axis direction, ny is the refractive index of the polymer film in the fast axis direction, and d is the thickness (nm) of the polymer film. The slow axis direction and the fast axis direction may be perpendicular to each other in the plane of the polymer film. The nx and ny may each be the refractive index for light having a wavelength of 550 nm. In this specification, the slow axis may mean an axis in the direction where the refractive index is the highest in the plane of the polymer film. In this specification, the fast axis may mean an axis in the direction where the refractive index is the lowest in the plane of the polymer film.

The base material layer may be an anisotropic polymer film imparting optical anisotropy by stretching. The polymer film may be exemplified by, for example, a polyolefin film such as a polyethylene film or a polypropylene film, a cycloolefin polymer (COP) film such as a polynorbornene film, a polyvinyl chloride film, a polyacrylonitrile film, a polysulfone film, a polyacrylate film, a PVA (poly(vinyl alcohol)) film or a cellulose ester-based polymer film such as a TAC (triacetyl cellulose) film, a polyester film or a polycarbonate film, or a copolymer film of two or more monomers among monomers forming the polymer, and the like. In one example, as the film, a polyester film such as a PET (poly(ethylene terephthalate)) film may be applied. That is, a film exhibiting an in-plane phase difference in the above-described range is known in the industry, and in the case of a polymer film, such a film exhibits asymmetry even in mechanical properties by stretching or the like in the manufacturing process as well as optically large anisotropy. A representative example of such a retardation film known in the industry is a stretched polyester film such as a stretched PET (poly(ethylene terephthalate)) film.

The spacer may be a spacer in a partition wall shape (hereinafter, may be referred to as a partition wall spacer). The partition wall spacer may confine a liquid crystal compound by positioning it in the internal region of the partition wall. Through this, it is possible to improve the adhesion force between the upper substrate and the lower substrate while maintaining the cell gap between the upper substrate and the lower substrate, and it may also be advantageous in terms of the physical rigidity of the liquid crystal cell.

When the substrate, on which the partition wall spacer is formed, is observed from the normal direction, the shape of the partition wall may be a straight line or a curved line. When the partition wall spacer is observed from the normal direction, the shape of the closed shape partitioned by the partition wall may be circular, oval, polygonal, or irregular. The closed shape partitioned by the partition wall is a region where no partition wall exists, so that it may also be referred to as a non-partition wall region. The irregular shape may mean an unstructured shape other than a circle, an ellipse, and a polygon. In this specification, the normal direction may mean a direction parallel to the thickness direction of the liquid crystal cell or the optical device or the stacking direction of layers included in the liquid crystal cell or the optical device.

The partition wall spacer may be a regular patterned partition wall spacer or a random patterned partition wall spacer. In the case of the regular patterned partition wall spacer, when the substrate on which the partition wall spacer is formed is observed from the normal direction, the closed shapes partitioned by the partition walls may have a certain shape. The certain shape may mean that the shapes of all the closed shapes are all n-gons having the same n value (n is an integer of 3 or more, and the upper limit is, for example, 10 or less), and the sizes of all the closed shapes are also almost the same. The regular patterned partition wall spacer may include a honeycomb-shaped partition wall spacer or a quadrangular spacer. The honeycomb-shaped partition wall spacer may have a non-partition wall region formed by a combination of regular hexagons, and the quadrangular spacer may have a non-partition wall region formed by a combination of regular squares or rhombuses. In the case of the random patterned partition wall spacer, when it is observed from the normal direction, the closed shapes partitioned by the partition walls may have an irregular shape. In one example, the random patterned partition wall spacer may be derived from randomization of the regular patterned partition wall spacer. The randomization of the regular pattern partition wall spacer may mean randomly moving vertices and/or line segments forming a closed polygonal shape of the regular patterned partition wall spacer. Through the randomization, the line segments may become curved lines. In the randomization, a plurality of vertices does not overlap each other, and a plurality of line segments does not break or intersect each other. The random patterned partition wall spacer derived from the randomization of the regular patterned partition wall spacer may maintain the relationship between the vertices and line segments of the regular pattern. In one example, in the case of the random patterned partition wall spacer in which the honeycomb-shaped regular pattern partition wall spacer is randomized, three curved lines may meet at one intersection like the honeycomb shape.

In one example, the partition wall spacer may be a regular patterned partition wall spacer. In the case of the regular patterned partition wall spacer, it may be more advantageous to adjust an orientation direction of liquid crystals in an alignment film on the side of the spacer so as not to affect a polarization direction of a polarizer. The fact that the orientation direction of the liquid crystals does not affect the polarization direction of the polarizer may mean that the angle formed by the orientation direction of the liquid crystals and the polarization direction of the polarizer (the transmission axis of the polarizer) is an angle close to 0 degrees or 90 degrees, for example, within a range of 0 degrees to 10 degrees, or within a range of 80 degrees to 90 degrees. Through this, it may be advantageous in resolving a light leakage problem due to the liquid crystal orientation on the side of the spacer. However, there are also cases where it is difficult to adjust it even in the regular patterned partition wall spacer to the above angle (for example, the case of a rhombus pattern), and when the substrate for an optical device of the present application is used, the problem due to the orientation of the liquid crystals on the side of the spacer may be resolved.

In one example, the partition wall spacer may be a random patterned partition wall spacer. The random patterned partition wall spacer has an advantage that a cross-shaped diffraction pattern is not observed upon observation in a point light source such as sunlight, compared to the regular patterned partition wall spacer. However, in the case of the random patterned partition wall spacer, it may not be easy to adjust the orientation direction of the liquid crystals in the alignment film on the side of the spacer to form the angle with the polarization direction of the polarizer. Therefore, in the case of the random patterned partition wall spacer, the liquid crystal region in the alignment film on the side of the spacer affects the polarization direction, whereby there may be a high possibility that light leakage will be observed. In particular, strong light leakage may occur at the angle that the orientation direction of the liquid crystals is around 45 degrees relative to the polarization direction. This may cause sparkling, and a circular rainbow pattern may also occur due to continuous sparkling at similar angles. When the substrate for an optical device of the present application is used, the problem due to the orientation of the liquid crystals on the side of the spacer can be solved.

The spacer may comprise a curable resin. The curable resin may be a thermosetting resin or a photocurable resin. The thermosetting resin may include one or more selected from the group consisting of silicone resins, silicon resins, fran resins, polyurethane resins, epoxy resins, amino resins, phenol resins, urea resins, polyester resins, and melamine resins. The photocurable resin may be a UV curable resin. In one example, the photocurable resin may be an acrylic resin. The acrylic resin may mean an acrylic polymer including a polymerization unit derived from a (meth)acrylic acid ester monomer. The acrylic polymer may include one or more selected from the group consisting of an alkyl acrylate polymer, a polyester acrylate polymer, a polystyrene acrylate polymer, an epoxy acrylate polymer, a polyurethane acrylate polymer, a polybutadiene acrylate polymer, and a silicone acrylate polymer. The spacer may comprise a cured product of the curable resin composition. The curable resin composition may be a thermosetting resin composition or a photocurable resin composition. The thermosetting resin composition or photocurable resin composition may comprise a monomer and/or a polymer to be capable of comprising the above-mentioned curable resin through curing.

In one example, the spacer may further comprise a black dye. If the spacer further comprises a black dye, it may be advantageous in reducing light leakage occurring in the spacer region. As the black dye, an inorganic substance such as carbon black or an organic substance such as lactam black may also be used. The content of the black dye may be appropriately selected within a range without impairing the purpose of the present application. In one example, the black dye may be included in a range of 0.1 parts by weight to 20 parts by weight relative to 100 parts by weight of the solid content of the curable resin composition.

In one example, the spacer may be formed by a patterning process. For example, the spacer may be formed by a photolithography process. The photolithography process may comprise a process of applying a curable resin composition onto a base material layer (onto an electrode layer when the electrode layer is formed on the base material layer), and then irradiating it with ultraviolet rays via a pattern mask. The pattern mask may be patterned into an ultraviolet-transmitting region and an ultraviolet-blocking region. The photolithography process may further comprise a process of washing the curable resin composition irradiated with ultraviolet rays. The region irradiated with ultraviolet rays is cured, and the region irradiated with no ultraviolet rays remains in a liquid phase, so that it is removed through the washing process, whereby it can be patterned into a partition wall shape. Therefore, the ultraviolet-transmitting region of the pattern mask may correspond to the partition wall shape, and the ultraviolet-blocking region of the pattern mask may correspond to the shape of the internal region formed by the partition wall. In the photolithography process, to easily separate the curable resin composition and the pattern mask after ultraviolet irradiation, a release treatment may be performed on the pattern mask, or a release paper may also be placed between the layer of the curable resin composition and the pattern mask.

In one example, the spacer may be formed by an imprinting process. The imprinting method may be performed by a method of applying a curable resin composition onto a base material layer (onto an electrode layer when the electrode layer is formed on the base material layer), and then removing an imprinting mold after bring it into contact with the curable resin composition. The imprinting mold may have a pattern capable of transferring a desired partition wall pattern. As the imprinting mold, any imprinting mold known in the industry may be used without limitation, and for example, a soft mold may be used. As a material for the soft mold, any material known in the industry may be applied, and for example, a flexible adhesive resin or PDMS (polydimethylsiloxane) may be used, but is not limited thereto.

In the imprinting method, a curing process for curing a curable resin composition may be further performed. The curing process may be performed through application of appropriate energy for curing a curable resin composition, for example, irradiation of heat and/or light. The energy for curing may be, for example, ultraviolet rays. The application conditions of the energy for curing are not particularly limited if it is performed so that the curable resin composition can be properly cured. The irradiation of the energy for curing may be performed, for example, before, simultaneously with, or after contacting the imprinting mold with the curable resin composition. In addition, in the imprinting method, a release treatment may be performed on the imprinting mold to easily separate the curable resin composition and the imprinting mold.

The line width, pitch, thickness, and area of the spacer may be appropriately selected within a range without impairing the purpose of the present application. For example, the line width of the spacer may be in a range of 10μm to 500μm or in a range of 10μm to 50μm. When the partition wall spacer is observed from the normal direction, the line width of the spacer means the line width of the partition wall, and means the line width of the upper surface of the partition wall. The spacing of the spacer may be in a range of 100μm to 1000μm or in a range of 200μm to 500μm. When the partition wall spacer is observed from the normal direction, the spacing of the spacer may mean the maximum distance between any two points in the cross-sectional shape of the non-partition wall region. The area ratio of the spacer may be, for example, about 5% or more and 50% or less, relative to 100% of the total area of the base material layer. When the substrate on which the spacer is formed is observed from the normal direction, the area ratio of the spacer may mean the ratio of the total area of the partition wall to the total area of the base material layer. When the area of the spacer is within the above range, it may be advantageous to ensure excellent electro-optical properties while adequately securing attachment force between the upper substrate and the lower substrate. The thickness of the spacer (height of the partition wall) may be, for example, in a range of 1μm to 30μm or 3μm to 20μm.

The surface of the alignment film (104) may comprise an upper surface (a1), a lower surface (a3), and an inclined side surface (hereinafter, may be referred to as an inclined surface) (a2) between the upper surface (a1) and the lower surface (a3). The surface of the alignment film may mean a surface opposite to a surface facing the spacer. The upper surface of the alignment film may be induced by the spacer. Therefore, the height of the upper surface may be higher than the height of the lower surface based on the base material layer. The difference in height between the upper surface and the lower surface of the alignment film is due to the height of the spacer. The upper surface of the alignment film may be formed to correspond to the partition wall of the spacer (the convex portion of the spacer).

When the alignment film has an inclined surface, it is possible to suppress light leakage even in the case where the liquid crystal cell is used with the polarizer, and thus, it is possible to improve the problem in which the sparkling phenomenon and the rainbow phenomenon occur. Particularly, when the liquid crystal cell is disposed between two polarizers whose absorption axes intersect, there is a possibility that strong light leakage occurs, but by using the substrate for an optical device of the present application, it is possible to improve the problem in which the light leakage occurs.

When manufacturing the lower substrate of the liquid crystal cell, after forming a spacer, an alignment film may be formed on the spacer. Therefore, the alignment film may also exist on the upper surface and the side surface of the spacer. The inclined surface of the alignment film may be due to the slope of the side surface of the spacer. Liquid crystals positioned close to the alignment film formed on the side surface of the spacer may be vertically oriented along the side surface of the alignment film. If the slope angle of the side surface of the alignment film is too large, for example, if it is 90 degrees, the optical axis of the liquid crystals oriented along the side surface of the alignment film may be horizontal with respect to the base material layer. In this case, a phase difference by the liquid crystals occurs, so that if it is used with the polarizer, there is a possibility that light leakage occurs due to misalignment with the polarization direction. When the inclination angle of the inclined surface of the alignment film is set to a predetermined range or less, the optical axis of the liquid crystals oriented along the side surface of the alignment film may not be horizontal to the base material layer, and may be inclined. In this case, the phase difference by the liquid crystals can be reduced, so that when it is used with a polarizer, it is possible to suppress the occurrence of light leakage due to misalignment with the polarization direction.

The inclination angle ($\theta$a) formed by the upper surface (a1) and the inclined surface (a2) of the alignment film (hereinafter, referred to as the inclination angle of the alignment film) may be appropriately selected in terms of solving the problem. The inclination angle ($\theta$a) of the alignment film may be, for example, 47 degrees or less. Specifically, the inclination angle of the alignment film may be 46 degrees or less or 45 degrees or less. The inclination angle of the alignment film may be more specifically 40 degrees or less, 35 degrees or less, 30 degrees or less, 25 degrees or less, 20 degrees or less, 15 degrees or less, 10 degrees or less, 8 degrees or less, or 6 degrees or less. The lower limit of the inclination angle of the alignment film may be, for example, 1 degree or more, 2 degrees or more, 3 degrees or more, 4 degrees or more, 5 degrees or more, or 6 degrees or more.

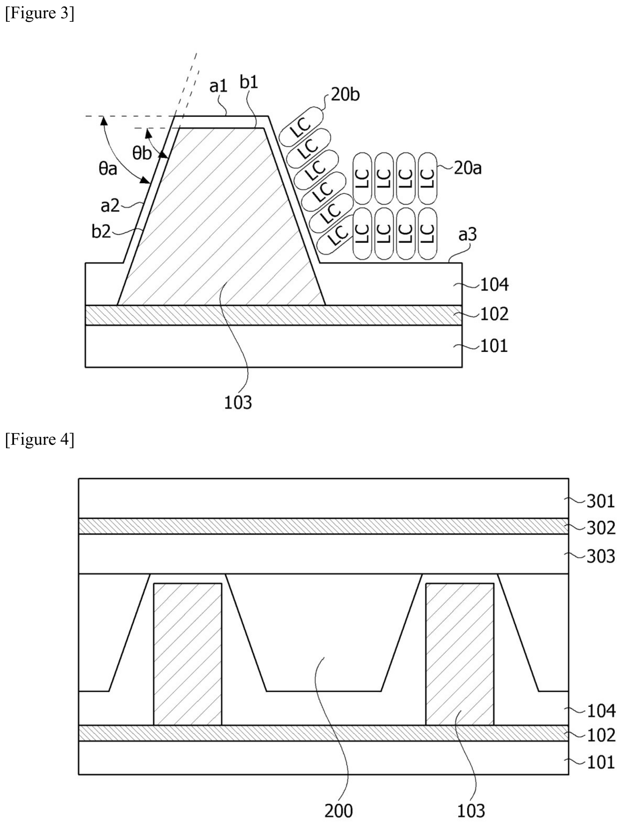

The alignment film may be a vertical alignment film or a horizontal alignment film. In this specification, the "horizontal alignment film" may mean a layer comprising an orientational material that imparts horizontal orientation force to a liquid crystal compound present in an adjacent liquid crystal region. In this specification, the "vertical alignment film" may mean a layer comprising an orientational material that imparts vertical orientation force to a liquid crystal compound present in an adjacent liquid crystal region. The adjacent liquid crystal compound may have a pretilt angle with respect to the vertical alignment film in the range of 80 degrees to 90 degrees, 85 degrees to 90 degrees, or about 87 degrees to 90 degrees, and the adjacent liquid crystal compound may have a pretilt angle with respect to the horizontal alignment film in the range of 0 degrees to 10 degrees, 0 degrees to 5 degrees or 0 degrees to 3 degrees. Unlike the pressure-sensitive adhesive layer, the alignment film may not have adhesion force for bonding the upper substrate and the lower substrate. In one example, the alignment film may have peel force close to zero with respect to the upper substrate in the state of the liquid crystal cell of Figures 4 to 6.

The alignment film may be a rubbing alignment film or a photo-alignment film. The orientation direction of the alignment film may follow a rubbing direction in the case of a rubbing alignment film and a direction of polarized light to be irradiated in the case of a photo-alignment film, where such an orientation direction can be confirmed by a detection method using an absorption-type linear polarizer. Specifically, the orientation direction can be confirmed by disposing an absorption-type linear polarizer on one side of the liquid crystal region in a state where the liquid crystal compound included in the liquid crystal region is horizontally oriented, and measuring transmittance while rotating the polarizer at 360 degrees. When the side of the liquid crystal region or the absorption-type linear polarizer is irradiated with light in the above state and simultaneously the luminance (transmittance) is measured from the other side, the transmittance tends to be low, if the absorption axis or transmission axis coincides with the orientation direction of the liquid crystal alignment film, where the orientation direction can be confirmed through simulation reflecting the refractive index anisotropy of the applied liquid crystal compound or the like. A method of confirming the orientation direction according to the mode of the liquid crystal region is known, and in the present application, the orientation direction of the alignment film can be confirmed by such a known method.

The alignment film may comprise one or more selected from the group consisting of a material known to exhibit orientation ability by rubbing orientation such as a polyimide compound, a poly(vinyl alcohol) compound, a poly(amic acid) compound, a polystyrene compound, a polyamide compound and a polyoxyethylene compound, or a material known to exhibit orientation ability by light irradiation such as a polyimide compound, a polyamic acid compound, a polynorbornene compound, a phenylmaleimide copolymer compound, a polyvinylcinnamate compound, a polyazobenzene compound, a polyethyleneimide compound, a polyvinylalcohol compound, a polyamide compound, a polyethylene compound, a polystyrene compound, a polyphenylenephthalamide compound, a polyester compound, a CMPI (chloromethylated polyimide) compound, a PVCI (polyvinylcinnamate) compound and a polymethyl methacrylate compound, but is not limited thereto.

The surface of the spacer may comprise an upper surface (b1) and a side surface (b2) connected to the upper surface (b1). The surface of the spacer may mean a surface opposite to a surface of the spacer facing the base material layer. Figures 1 to 3 exemplarily illustrate that there is no lower region between the convex portions (partition walls) of the spacer, but depending on the process of the spacer, for example, when the spacer is formed by the imprinting process, the lower region between the convex portions of the spacer may also be formed by a residual film. When the spacer is formed by the photolithography process, the spacer may be formed without the residual film. Alternatively, if the residual film is required, the residual film may also be formed by the photolithography process. The lower region provides a lower surface of the spacer, where the surface of the spacer may comprise an upper surface, a lower surface, and a side surface between the upper surface and the lower surface. An angle ($\theta$b) formed by the upper surface (b1) and the side surface (b2) of the spacer (hereinafter, may be referred to as an inclination angle of the spacer) may be in a range of 30 to 90 degrees. The inclination angle ($\theta$b) of the spacer may be, for example, 30 degrees or more, 35 degrees or more, 40 degrees or more, 45 degrees or more, 50 degrees or more, 55 degrees or more, 60 degrees or more, 65 degrees or more, 70 degrees or more, 75 degrees or more, 80 degrees or more, or 85 degrees or more, and may be 90 degrees or less, 85 degrees or less, 80 degrees or less, 75 degrees or less, 70 degrees or less, 65 degrees or less, 60 degrees or less, or 55 degrees or less.

The method of adjusting the inclination angle of the spacer is not particularly limited, and a method known in the relevant technical field may be appropriately applied. In one example, when the space is formed by the photolithography process, the UV light irradiated upon curing may be controlled. If the UV light is straight light, the inclination angle of the spacer may also be formed high, for example, 80 degrees or more, 85 degrees or more, or close to 90 degrees. If the UV light is diffusion light, the inclination angle of the spacer may be adjusted lower. If the UV light is diffusion light, the light also spreads to the side surface, where tails may be increased as the intensity of the light increases, so that the inclination angle may be reduced. Generally, the UV irradiated from a UV lamp is diffusion light, and if a light guide plate is applied to the side where the light of the UV lamp is irradiated so that the light may travel in a straight line, it may also be made straight light. In another example, when the spacer is formed by the imprinting process, an imprinting mold having an engraved pattern corresponding to a spacer having a desired inclination angle may be used.

The substrate for an optical device may further comprise an undercoating layer (105) existing between the spacer (103) and the alignment film (104). The surface of the undercoating layer may comprise an upper surface (c1), a lower surface (c3), and an inclined side surface (hereinafter, may be referred to as an inclined surface) (c2) between the upper surface (c1) and the lower surface (c3). The surface of the undercoating layer may mean a surface opposite to a surface of the undercoating layer facing the spacer. An angle (θc) formed by the upper surface (c1) and the inclined surface (c2) of the undercoating layer (hereinafter, may be referred to as an inclination angle of the undercoating layer) may be appropriately selected within a range capable of satisfying the inclination angle of the alignment film. The inclination angle (θc) of the undercoating layer may be, for example, in a range of 5 degrees to 60 degrees. The inclination angle of the undercoating layer may be specifically 5 degrees or more, or 10 degrees or more, and may be 60 degrees or less, 55 degrees or less, 50 degrees or less, 45 degrees or less, 40 degrees or less, 35 degrees or less, 30 degrees or less, or 25 degrees or less. The inclination angle of the undercoating layer may be adjusted, for example, by controlling the thickness of the undercoating layer coated on the spacer. In one example, if the undercoating layer is coated thickly on the spacer, the tails of the inclined surface (c2) in the undercoating layer may be increased, so that the inclination angle of the undercoating layer may be reduced.

The undercoating layer may comprise a curable resin. The curable resin may be a thermosetting resin or a photocurable resin. The thermosetting resin may comprise one or more selected from the group consisting of a silicone resin, a silicon resin, a fran resin, a polyurethane resin, an epoxy resin, an amino resin, a phenol resin, a urea resin, a polyester resin, and a melamine resin. The photocurable resin may be a UV-curable resin. In one example, the photocurable resin may be an acrylic resin. The acrylic resin may mean an acrylic polymer including a polymerization unit derived from a (meth)acrylic acid ester monomer. The acrylic polymer may include one or more selected from the group consisting of an alkyl acrylate polymer, a polyester acrylate polymer, a polystyrene acrylate polymer, an epoxy acrylate polymer, a polyurethane acrylate polymer, a polybutadiene acrylate polymer, and a silicone acrylate polymer.

The undercoating layer may comprise a cured product of the curable resin composition. The curable resin composition may be a thermosetting resin composition or a photocurable resin composition. The thermosetting resin composition or photocurable resin composition may comprise a monomer and/or a polymer to be capable of comprising the above-mentioned curable resin through curing. In one example, the curable resin composition may comprise a (meth)acrylate compound. The (meth)acrylate compound may be a multifunctional (meth)acrylate compound having two or more (meth)acryl groups at the terminal. The (meth)acrylate compound may have 2 to 6, or 2 to 4 (meth)acryl groups. In one example, the curable resin composition may comprise difunctional (meth)acrylate, trifunctional (meth)acrylate, and tetrafunctional (meth)acrylate compounds. In one example, the curable resin composition may further comprise a thiol compound. The thiol compound may be a multifunctional thiol compound having two or more thiol groups (-SH) at the terminal. The thiol compound may have 2 to 6, 2 to 4, or 4 thiol groups (-SH).

In one example, the undercoating layer may further comprise a black dye. The undercoating layer comprising a black dye may be formed by adding a black dye to the curable resin composition. When the undercoating layer further comprises a black dye, it may be advantageous in reducing light leakage in the region of the undercoating layer present on the side surface of the spacer. As the black dye, an inorganic substance such as carbon black or an organic substance such as lactam black may also be used. The content of the black dye may be appropriately selected within a range without impairing the purpose of the present application. The black dye may be included within a range of 10 parts by weight to 50 parts by weight relative to 100 parts by weight of the solid content of the curable resin composition.

The substrate for an optical device may further comprise an electrode layer (102) between the base material layer (101) and the spacer (103). Explanations of a first electrode layer and/or a second electrode layer, which are described below, may be equally applied to the electrode layer.

The method of adjusting the inclination angle of the alignment film may be appropriately selected within a range without impairing the purpose of the present application. Figures 1 to 3 exemplarily show structures of a substrate in which an angle of an alignment film is controlled in various methods.

In one example, as shown in Figure 1, the inclination angle (θa) of the alignment film (104) may be controlled by adjusting the coating thickness of the alignment film (104). If the alignment film is coated thickly, the tails of the alignment film on the inclined surface (a2) of the alignment film may be increased, so that the inclination angle of the alignment film may be reduced.

In another example, as shown in Figure 2, the inclination angle (θa) of the alignment film (104) may be controlled by applying an undercoating layer (105) under the alignment film (104). If the undercoating layer is applied, the slope may be generated on the side surface (b2) of the spacer (103). If the undercoating layer is coated thickly, the tails of the inclined side surface of the undercoating layer (c2) on the spacer side surface (b2) are increased, so that the inclination angle of the undercoating layer may be reduced. Through this, the inclination angle of the alignment film may also be reduced.

In another example, as shown in Figure 3, the inclination angle (θa) of the alignment film (104) may be controlled by forming the side surface (b2) of the spacer (103) to have a slope upon forming the spacer (103). The smaller the inclination angle ($\theta b$, the angle formed by the upper surface and the side surface of the spacer) of the spacer is formed, the smaller the inclination angle ($\theta a$) of the alignment film may be.

In providing the substrate for an optical device of the present application, among the three methods of controlling the inclination angle of the alignment film, any one method may also be applied, two methods may also be applied, and all three methods may also be applied.

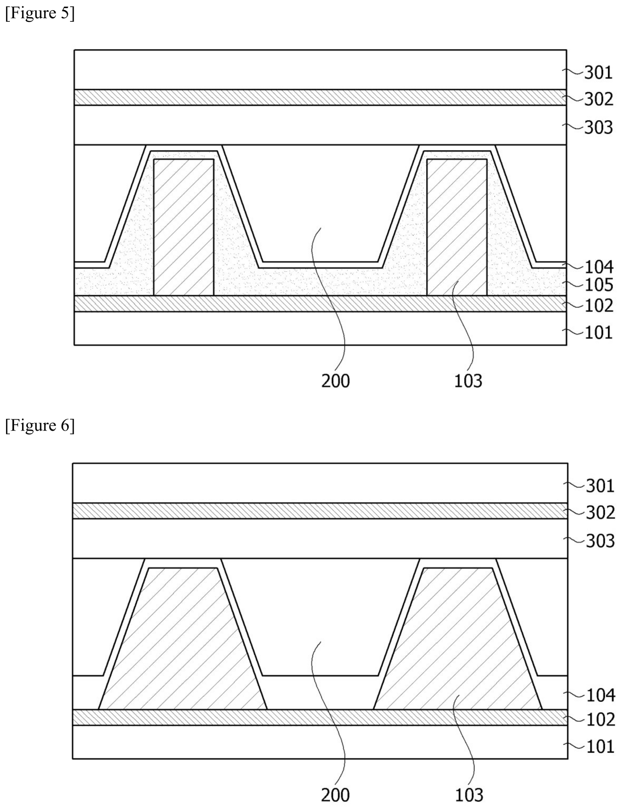

The present application also relates to an optical device comprising the substrate. The optical device may comprise a liquid crystal cell. Figures 4 to 6 exemplarily show a liquid crystal cell comprising a substrate for an optical device of the present application. Figure 4 exemplarily shows a liquid crystal cell comprising the substrate for an optical device of Figure 1. Figure 5 exemplarily shows a liquid crystal cell comprising the substrate for an optical device of Figure 2. Figure 6 exemplarily shows a liquid crystal cell comprising the substrate for an optical device of Figure 3.

The liquid crystal cell may comprise an upper substrate, a lower substrate, and a liquid crystal layer including a liquid crystal compound between the upper substrate and the lower substrate.

The upper substrate may comprise a first base material layer (301) and a pressure-sensitive adhesive layer (303). The substrate for an optical device may be used as the lower substrate. The lower substrate may comprise a second base material layer (101), a spacer (103), and an alignment film (104). A liquid crystal layer (200) may be present in a region between the upper substrate and the lower substrate. The surface of the alignment film may comprise an upper surface, a lower surface, and an inclined surface between the upper surface and the lower surface. The inclination angle formed by the upper surface and the inclined surface of the alignment film satisfies a predetermined range, whereby it is possible to improve the sparkling phenomenon and the rainbow phenomenon.

The contents described in the substrate for an optical device may be equally applied to the contents of the lower substrate. Therefore, the explanations of the base material layer, electrode layer, spacer, undercoating layer, and alignment film described in the substrate for an optical device may be equally applied to the second base material layer, second electrode layer, spacer, undercoating layer, and alignment film described in the lower substrate. The contents described in the base material layer of the substrate for an optical device may be equally applied to the first base material layer of the upper substrate.

The pressure-sensitive adhesive layer may be present on the inner side surface of the first base material layer. In this specification, the "inner side surface" of the configuration included in the liquid crystal cell may mean a surface facing the liquid crystal region (liquid crystal layer). In this specification, the "outer side surface" of the constitution included in the liquid crystal cell may mean an opposite surface of a surface facing the liquid crystal region (liquid crystal layer). Due to the use of such a pressure-sensitive adhesive layer, attachment force may be imparted between the upper and lower substrates so that separation of the liquid crystal cells does not occur during the bonding process for supporting the liquid crystal composition between the upper and lower substrates or in the subsequent processes. In addition, the pressure-sensitive adhesive layer may be advantageous for roll-to-roll processability and preventing flow of the liquid crystal composition.

In this specification, the term "layer of the pressure-sensitive adhesive composition" may mean a layer formed by coating or curing the pressure-sensitive adhesive composition. The term "curing of the pressure-sensitive adhesive composition" may mean implementing a cross-linked structure in the pressure-sensitive adhesive composition through a physical or chemical action or reaction of components included in the pressure-sensitive adhesive composition. The curing can be induced by performing, for example, maintenance at room temperature, moisture application, heat application, active energy ray irradiation, or two or more processes of the foregoing together, and in each case, the pressure-sensitive adhesive composition in a type that the curing is induced may be referred to as, for example, a room temperature curing pressure-sensitive adhesive composition, a moisture-curing pressure-sensitive adhesive composition, a heat-curing pressure-sensitive adhesive composition, an active energy ray-curing pressure-sensitive adhesive composition or a hybrid curing pressure-sensitive adhesive composition.

The pressure-sensitive adhesive layer may be optically transparent. The pressure-sensitive adhesive layer may have average transmittance of about 80% or more, 85% or more, 90% or more, or 95% or more for light with the visible light region, for example, a wavelength of 380 nm to 780 nm.

The pressure-sensitive adhesive layer may be a liquid crystal orientational pressure-sensitive adhesive layer. The pressure-sensitive adhesive layer may be, for example, a vertically orientational pressure-sensitive adhesive layer or a horizontally orientational pressure-sensitive adhesive layer. In this specification, the "vertically orientational pressure-sensitive adhesive" may mean a pressure-sensitive adhesive having attachment force capable of boding the upper substrate and the lower substrate while imparting vertical orientation force to the adjacent liquid crystal compound. In this specification, the "horizontally orientational pressure-sensitive adhesive" may mean a pressure-sensitive adhesive having attachment force capable of bonding the upper substrate and the lower substrate while imparting horizontal orientation force to the adjacent liquid crystal compound. The pretilt angle of the adjacent liquid crystal compound with respect to the vertically orientational pressure-sensitive adhesive may be in a range of 80 degrees to 90 degrees, 85 degrees to 90 degrees or about 87 degrees to 90 degrees, and the pretilt angle of the adjacent liquid crystal compound with respect to the horizontally orientational pressure-sensitive adhesive may be in a range of 0 degrees to 10 degrees, 0 degrees to 5 degrees or 0 degrees to 3 degrees. According to one example of the present application, the pressure-sensitive adhesive layer may be a vertically orientational pressure-sensitive adhesive layer.

In this specification, the pretilt angle may mean an angle formed by a director of a liquid crystal compound with respect to a plane horizontal to a liquid crystal orientational pressure-sensitive adhesive or an alignment film in a state where no voltage is applied. In this specification, the director of the liquid crystal compound may mean the optical axis or the slow axis of the liquid crystal region. Alternatively, the director of the liquid crystal compound may mean a long axis direction when the liquid crystal compound has a rod shape, and may mean an axis parallel to the normal direction of the disk plane when the liquid crystal compound has a discotic shape.

When the pressure-sensitive adhesive layer is a vertical orientation pressure-sensitive adhesive layer, the pressure-sensitive adhesive may have a surface energy of 16 mN/m or less. The lower limit of the surface energy in the vertical orientation pressure-sensitive adhesive layer may be, for example, 5 mN/m or more. When the pressure-sensitive adhesive layer is a horizontal orientation pressure-sensitive adhesive layer, the surface energy may be greater than 16 mN/m. The upper limit of the surface energy in the horizontal orientation pressure-sensitive adhesive layer may be, for example, 50 mN/m or less. The surface energy can be measured using a drop shape analyzer (KRUSS' DSA100 product). Specifically, a process that deionized water with a known surface tension is dropped on the surface of the pressure-sensitive adhesive to obtain the contact angle is repeated 5 times, thereby obtaining the average value of the resulting five contact angle values, and equally a process that diiodomethane with a known surface tension is dropped thereon to obtain the contact angle is repeated 5 times, thereby obtaining the average value of the resulting five contact angle values. Then, the surface energy may be obtained by substituting a numerical value (Strom value) for the surface tension of the solvent by the Owens-Wendt-Rabel-Kaelble method using the obtained average values of the contact angles for deionized water and diiodomethane. The surface energy ($\gamma$surface) of the sample can be calculated by considering the dispersion force between nonpolar molecules and the interaction force between polar molecules ($\gamma$surface = $\gamma$dispersion + $\gamma$polar), where the ratio of the polar term ($\gamma$polar) in the surface energy $\gamma$surface can be defined as polarity of the surface.

The thickness of the pressure-sensitive adhesive layer may be, for example, in a range of 3 $\mu$m to 15 $\mu$m. When the thickness of the pressure-sensitive adhesive layer is within the above range, it may be advantageous to minimize defects such as pressing or crowding of the pressure-sensitive adhesive when used in the manufacture of a liquid crystal cell, while securing attachment force between the upper substrate and the lower substrate.

As the pressure-sensitive adhesive layer, various types of pressure-sensitive adhesives known in the industry as a so-called OCA (optically clear adhesive) may be appropriately used. The pressure-sensitive adhesive may be different from an OCR (optically clear resin) type adhesive which is cured after the object to be attached is bonded in that it is cured before the object to be attached is bonded.

The pressure-sensitive adhesive layer may comprise a silicone pressure-sensitive adhesive. In the case of the silicone pressure-sensitive adhesive, the pressure-sensitive adhesive composition may comprise a curing silicone compound as a pressure-sensitive adhesive resin. The pressure-sensitive adhesive composition comprising a curing silicone compound as the pressure-sensitive adhesive resin may be referred to as a silicone composition. The silicone pressure-sensitive adhesive may comprise a cured product of a curing silicone compound as the pressure-sensitive adhesive resin. In the case of using the silicone pressure-sensitive adhesive, it may be suitable for showing vertical orientation force with respect to the liquid crystals due to the surface energy difference with the liquid crystals, and it may also be advantageous in terms of preventing contamination of the liquid crystals. The type of the curing silicone compound is not particularly limited, and for example, a heat-curing silicone compound or an ultraviolet-curing silicone compound may be used.

In one example, the curing silicone compound may be an addition-curing silicone compound.

Specifically, the addition-curing silicone compound may be exemplified by (1) an organopolysiloxane containing two or more alkenyl groups in the molecule and (2) an organopolysiloxane containing two or more silicon-bonded hydrogen atoms in the molecule, but is not limited thereto. Such a silicone compound may form a cured product by an addition reaction, for example, in the presence of a catalyst as described below.

A more specific example of the (1) organopolysiloxane usable in the present application may include a dimethylsiloxane-methylvinylsiloxane copolymer blocking with trimethylsiloxane groups at both ends of the molecular chain, a methylvinylpolysiloxane blocking with trimethylsiloxane groups at both ends of the molecular chain, a dimethylsiloxane-methylvinylsiloxane-methylphenylsiloxane copolymer blocking with trimethylsiloxane groups at both ends of the molecular chain, a dimethylpolysiloxane blocking with dimethylvinylsiloxane groups at both ends of the molecular chain, a methyl vinylpolysiloxane blocking with dimethylvinylsiloxane groups at both ends of the molecular chain, a dimethylsiloxane-methylvinylsiloxane copolymer blocking with dimethylvinylsiloxane groups at both ends of the molecular chain, a dimethylsiloxane-methylvinylsiloxane-methylphenylsiloxane copolymer blocking with dimethylvinylsiloxane groups at both ends of the molecular chain, an organopolysiloxane copolymer comprising a siloxane unit represented by $R^1_2SiO_{1/2}$ and a siloxane unit represented by $R^1R^2SiO_{1/2}$ and a siloxane unit represented by $SiO_{4/2}$, an organopolysiloxane copolymer comprising a siloxane unit represented by $R^1_2R^2SiO_{1/2}$ and a siloxane unit represented by $SiO_{4/2}$, an organopolysiloxane copolymer comprising a siloxane unit represented by $R^1R^2SiO_{2/2}$ and a siloxane unit represented by $R^1SiO_{3/2}$ or a siloxane unit represented by $R^2SiO_{3/2}$, and a mixture of two or more of the foregoing, but is limited thereto. Here, $R^1$ or $R^2$ is a hydrocarbon group other than an alkenyl group, specifically, an alkyl group such as a methyl group, an ethyl group, a propyl group, a butyl group, a pentyl group, a hexyl group or a heptyl group; an aryl group such as a phenyl group, a tolyl group, a xylyl group or a naphthyl group; an aralkyl group such as a benzyl group or a phenethyl group; a halogen-substituted alkyl group such as a chloromethyl group, a 3-chloropropyl group, or a 3,3,3-trifluoropropyl group, and the like. In addition, here, $R^2$ is an alkenyl group, which may be, specifically, a vinyl group, an allyl group, a butenyl group, a pentenyl group, a hexenyl group or a heptenyl group, and the like.

A more specific example of the (2) organopolysiloxane usable in the present application may include a methylhydrogenpolysiloxane blocking with trimethylsiloxane groups at both ends of the molecular chain, a dimethylsiloxane-methylhydrogen copolymer blocking with trimethylsiloxane groups at both ends of the molecular chain, a dimethylsiloxane-methylhydrogensiloxane-methylphenylsiloxane copolymer blocking with trimethylsiloxane groups at both ends of the molecular chain, a dimethylpolysiloxane blocking with dimethylhydrogensiloxane groups at both ends of the molecular chain, a dimethylsiloxane-methylphenylsiloxane copolymer blocking with dimethylhydrogensiloxane groups at both ends of the molecular chain, a methylphenylpolysiloxane blocking with dimethylhydrogensiloxane groups at both ends of the molecular chain, an organopolysiloxane copolymer comprising a siloxane unit represented by $R^1_3SiO_{1/2}$, a siloxane unit represented by $R^1_2HSiO_{1/2}$ and a siloxane unit represented by $SiO_{4/2}$, an organopolysiloxane copolymer comprising a siloxane unit represented by $R^1_2HSiO_{1/2}$ and a siloxane unit represented by $SiO_{4/2}$, an organopolysiloxane copolymer comprising a siloxane unit represented by $R^1HSiO_{2/2}$ and a siloxane unit represented by $R^1SiO_{3/2}$ or a siloxane unit represented by $HSiO_{3/2}$ and a mixture of two or more of the foregoing, but is not limited thereto. Here, $R^1$ is a hydrocarbon group other than an alkenyl group, which may be, specifically, an alkyl group such as a methyl group, an ethyl group, a propyl group, a butyl group, a pentyl group, a hexyl group or a heptyl group; an aryl group such as a phenyl group, a tolyl group, a xylyl group or a naphthyl group; an aralkyl group such as a benzyl group or a phenethyl group; a halogen-substituted alkyl group such as a chloromethyl group, a 3-chloropropyl group or a 3,3,3-trifluoropropyl group, and the like.

Among physical properties mentioned in this specification, when the measurement temperature affects the results, the relevant physical property is a physical property measured at room temperature, unless otherwise specified. The term room temperature is a natural temperature without warming or cooling, which is usually any one temperature within a range of about 10°C to 30°C, or about 23°C, or about 25°C or so. In addition, unless otherwise specified in this specification, the unit of temperature is °C. Among physical properties mentioned in this specification, when the measurement pressure affects the results, the relevant physical property is a physical property measured at normal pressure, unless otherwise specified. The term normal pressure is a natural pressure without pressurization or depressurization, in which the normal pressure is usually referred to as about 1 atm or so.

The upper substrate and the lower substrate of the liquid crystal cell may be attached by the pressure-sensitive adhesive layer. Specifically, the pressure-sensitive adhesive layer of the upper substrate and the spacer of the lower substrate may be attached. When the alignment film is formed on the spacer of the lower substrate, the region corresponding to the spacer of the alignment film may be attached to the pressure-sensitive adhesive layer of the upper substrate.

The spacer may maintain a gap between the upper substrate and the lower substrate. A liquid crystal region may exist in a region where the spacer does not exist between the upper substrate and the lower substrate. The spacer is a partition wall-shaped spacer, and the liquid crystal compound may exist in a region (non-partition wall region) partitioned by the partition wall. The region where the liquid crystal compound exists may be referred to as a liquid crystal region.

The liquid crystal compound can switch its orientational state by application of a voltage. As the liquid crystal compound, a liquid crystal compound capable of changing the alignment direction by application of an external action may be used. In this specification, the term "external action" may mean all external factors that may affect the behavior of materials included in the liquid crystal region, for example, an external voltage, or the like. Therefore, the state without any external action may mean a state without application of an external voltage, or the like.

The type and physical properties of the liquid crystal compound may be appropriately selected in consideration of the purpose of the present application. In one example, the liquid crystal compound may be a nematic liquid crystal or a smectic liquid crystal. The nematic liquid crystal may mean a liquid crystal that rod-shaped liquid crystal molecules are arranged in parallel in the long-axis direction of the liquid crystal molecules although there is no regularity in their positions. The smectic liquid crystal may mean a liquid crystal that rod-shaped liquid crystal molecules are regularly arranged to form a layered structure and are arranged in parallel with regularity in the long axis direction. According to one example of the present application, the liquid crystal compound may be a nematic liquid crystal compound.

As the nematic liquid crystal compound, one having a clearing point of, for example, 40°C or more, 50°C or more, 60°C or more, 70°C or more, 80°C or more, 90°C or more, 100°C or more, or 110°C or more, or having a phase transition point in the above range, that is, a phase transition point to an isotropic phase on a nematic phase, can be selected. In one example, the clearing point or phase transition point may be 160°C or less, 150°C or less, or 140°C or less.

The liquid crystal compound may be a non-reactive liquid crystal compound. The non-reactive liquid crystal compound may mean a liquid crystal compound having no polymerizable group. The polymerizable group may be exemplified by an acryloyl group, an acryloyloxy group, a methacryloyl group, a methacryloyloxy group, a carboxyl group, a hydroxy group, a vinyl group or an epoxy group, and the like, but is not limited thereto, and a functional group known as the polymerizable group may be included.

The liquid crystal compound may have dielectric constant anisotropy of a positive number or a negative number. The absolute value of the dielectric constant anisotropy of the liquid crystal compound may be appropriately selected in consideration of the purpose of the present application. The term "dielectric constant anisotropy ($\Delta\varepsilon$)" may mean a difference ($\varepsilon/ - \varepsilon\perp$) between the horizontal dielectric constant ($\varepsilon/$) and the vertical dielectric constant ($\varepsilon\perp$) of the liquid crystal. In this specification, the term horizontal dielectric constant ($\varepsilon/$) means a dielectric constant value measured along the direction of an electric field in a state where a voltage is applied so that the director of the liquid crystal and the direction of the electric field by the applied voltage are substantially horizontal, and the vertical dielectric constant ($\varepsilon\perp$) means a dielectric constant value measured along the direction of an electric field in a state where a voltage is applied so that the director of the liquid crystal and the direction of the electric field by the applied voltage are substantially perpendicular. The dielectric constant anisotropy of the liquid crystal molecules may be in a range of 5 to 25.

The refractive index anisotropy ($\Delta n$) of the liquid crystal compound may be appropriately selected in consideration of the purpose of the present application. In this specification, the term "refractive index anisotropy" may mean a difference ($n_e - n_o$) between an extraordinary refractive index ($n_e$) and an ordinary refractive index ($n_o$) of a liquid crystal compound. The refractive index anisotropy of the liquid crystal compound may be, for example, 0.01 to 0.3. The refractive index anisotropy may be 0.01 or more, 0.05 or more, or 0.07 or more, and may be 0.3 or less, 0.2 or less, 0.15 or less, or 0.13 or less.

The thickness of the liquid crystal region (liquid crystal layer) may be determined according to the height of the spacer (partition wall). The thickness of the liquid crystal region is not particularly limited, and for example, the thickness of the liquid crystal region or the height of the spacer (partition wall) may be about 0.01μm or more, 0.05μm or more, 0.1μm or more, 0.5μm or more, 1μm or more, 1.5μm or more, 2μm or more, 2.5μm or more, 3μm or more, 3.5μm or more, 4μm or more, 4.5μm or more, 5μm or more, 5.5μm or more, 6μm or more, 6.5μm or more, 7μm or more, 7.5μm or more, 8μm or more, 8.5μm or more, 9μm or more, or 9.5μm or more. The upper limit of the thickness of the liquid crystal region or the height of the spacer (partition wall) is not particularly limited, which may generally be about 30μm or less, 25μm or less, 20μm or less, or 15μm or less.

The liquid crystal cell may switch the orientational state of the liquid crystal region according to an applied voltage. In one example, in a state where no voltage is applied to the liquid crystal cell, the liquid crystal region may have a first orientational state, and in a state where a voltage is applied to the liquid crystal cell, the liquid crystal region may have a second orientational state different from the first orientational state. The first orientational state and/or the second orientational state may be exemplified by a horizontal orientational state, a vertical orientational state, a twist orientational state, an inclined orientational state, a hybrid orientational state, and the like.

In this specification, the "horizontal orientational state" is a state where the director of the liquid crystal compound in the liquid crystal region is arranged substantially parallel to the plane of the liquid crystal region, where for example, the angle formed by the director with respect to the plane of the liquid crystal region may be, for example, in the range of about -10 degrees to 10 degrees or about -5 degrees to 5 degrees, or may form approximately 0 degrees.

In this specification, the "vertical orientational state" is a state where the director of the liquid crystal compound in the liquid crystal region is arranged substantially perpendicular to the plane of the liquid crystal region, where for example, the angle formed by the director with respect to the plane of the liquid crystal region may be, for example, in the range of about 80 degrees to 100 degrees or about 85 degrees to 95 degrees, or may form approximately 90 degrees.

In this specification, the "twist orientational state" may mean a spiral structure in which the directors of the liquid crystal compounds in the liquid crystal region are twisted along an imaginary spiral axis to form a layer and oriented. The twist orientational state may be implemented in a vertical, horizontal or oblique orientational state, and that is, the vertical twist orientational mode is a state where individual liquid crystal compounds are twisted along a spiral axis in a vertically oriented state to form a layer; the horizontal twist orientational mode is a state where individual liquid crystal compounds are twisted along a spiral axis in a horizontally oriented state to form a layer; and the oblique twist orientational mode is a state where individual liquid crystal compounds are twisted along a spiral axis in an obliquely oriented state to form a layer.

In this specification, the "hybrid orientational state" may mean an orientational state in which a tilt angle, which is an angle formed by a director of a liquid crystal compound in the liquid crystal region with respect to the plane of the liquid crystal region, gradually increases or decreases along the thickness direction of the liquid crystal region.

In one example, the first orientational state may be a twist orientational state. That is, the liquid crystal region may switch between twist orientation and an orientational state different from the twist orientation through the application of external energy.

In one example, the liquid crystal region may switch between the twist orientational state and the vertical orientational state. In another example, the liquid crystal region may be in the vertical orientational state in a state where no voltage is applied, and may be in the twist orientational state in a state where a voltage is applied. The twist orientational state may be a horizontal twist orientational state.

In one example, when the liquid crystal compound exists in a vertical orientational state, both a vertical orientational state with respect to the inclined surface of the alignment film and a vertical orientational state with respect to the lower surface of the alignment film may be implemented. When the liquid crystal compound is in the vertical orientational state with respect to the inclined surface of the alignment film, it may be in a tilted orientational state with respect to the base material layer. In this case, by reducing the phase difference by the liquid crystals, it is possible to suppress light leakage due to misalignment with the polarization direction of the polarizer.

The liquid crystal region may further comprise a chiral dopant. When the liquid crystal region comprises the chiral dopant, the twist orientational state may be implemented. The chiral dopant that can be included in the liquid crystal region can be used without special limitation if it is a chiral agent capable of inducing a desired rotation (twisting) without deteriorating the liquid crystallinity, for example, the nematic regularity. The chiral agent for inducing rotation in the liquid crystal compound needs to include at least chirality in the molecular structure. The chiral agent may be exemplified by, for example, a compound having one or two or more asymmetric carbons, a compound having an asymmetric point on a heteroatom, such as a chiral amine or a chiral sulfoxide, or a compound having axially asymmetric and optically active sites such as cumulene or binaphthol. The chiral agent may be, for example, a low molecular weight compound having a molecular weight of 1,500 or less. As the chiral agent, commercially available chiral nematic liquid crystals, for example, chiral dopant liquid crystal S811 commercially available from Merck Co., Ltd., or BASF's LC756 may also be used.

The application rate of the chiral dopant may be selected so that the desired pitch (P) may be achieved. In general, the content (wt%) of the chiral dopant may be calculated by an equation of 100/(HTP X P). The HTP represents the helical twisting power of the chiral dopant, where the unit may be $\mu m^{-1}$. The P may be the pitch of the liquid crystal in the twist orientational state, where the unit may be $\mu m$. The pitch (P) of the liquid crystal region can be measured by a measurement method using a wedge cell, and specifically, can be measured by a method described in D. Podolskyy et al. Simple method for accurate measurements of the cholesteric pitch using a "stripe-wedge" Grandjean-Cano cell (Liquid Crystals, Vol. 35, No. 7, July 2008, 789-791). The HTP value can be measured by the measurement method using the above-described wedge cell. Alternatively, the HTP value can be generally provided from a supplier of liquid crystals and chiral dopants. The content of the chiral dopant may be determined in consideration of the desired pitch with reference to the above method.

In one example, the pitch (unit: $\mu m$) of the liquid crystal in the twist orientational state may be within a range of $15\mu m$ to $50\mu m$. The pitch may be, specifically, $16\mu m$ or more, $17\mu m$ or more, $18\mu m$ or more, $19\mu m$ or more, or $20\mu m$ or more, and may be $50\mu m$ or less, $45\mu m$ or less, $40\mu m$ or less, $35\mu m$ or less, or $30\mu m$ or less.

The liquid crystal region may further comprise a dichroic dye. The dichroic dye may control light transmittance variable properties of the liquid crystal region. In this specification, the term "dye" may mean a material capable of intensively absorbing and/or deforming light in at least a part of or all the ranges within a visible light region, for example, within a wavelength range of 400 nm to 700 nm, and the term "dichroic dye" may mean a material capable of anisotropic absorption of light in at least a part of or all the ranges of the visible light region.

The liquid crystal region comprising the liquid crystal compound and the dichroic dye may be a GHLC layer (guest host liquid crystal region). In this specification, the "GHLC layer (guest host liquid crystal region)" may mean a functional layer that dichroic dyes are arranged together depending on arrangement of the liquid crystal compound to exhibit anisotropic light absorption characteristics with respect to an alignment direction of the dichroic dyes and the direction perpendicular to the alignment direction, respectively. For example, the dichroic dye is a substance whose absorption rate of light varies with a polarization direction, where if the absorption rate of light polarized in the long axis direction is large, it may be referred to as a p-type dye, and if the absorption rate of polarized light in the short axis direction is large, it may be referred to as an n-type dye. In one example, when a p-type dye is used, the polarized light vibrating in the long axis direction of the dye may be absorbed and the polarized light vibrating in the short axis direction of the dye may be less absorbed to be transmitted. Hereinafter, unless otherwise specified, the dichroic dye is assumed to be a p-type dye.

As the dichroic dye, for example, a known dye known to have a property capable of being aligned according to the orientational state of the liquid crystal compound by a so-called guest host effect may be selected and used. An example of such a dichroic dye includes azo dyes, anthraquinone dyes, methine dyes, azomethine dyes, merocyanine dyes, naphthoquinone dyes, tetrazine dyes, phenylene dyes, quarterrylene dyes, benzothiadiazole dyes, diketopyrrolopyrrole dyes, squaraine dyes or pyrromethene dyes, and the like, but the dyes applicable in the present application are not limited thereto.

A dichroic dye having a dichroic ratio of a dichroic dye, that is, a value obtained by dividing the absorption of the polarized light parallel to the long axis direction of the dichroic dye by the absorption of the polarized light parallel to the direction perpendicular to the long axis direction, of 5 or more, 6 or more, or 7 or more, can be used. The dichroic dye may satisfy the dichroic ratio in at least a part of the wavelengths or any one wavelength within the wavelength range of the visible light region, for example, within the wavelength range of about 380 nm to 700 nm or about 400 nm to 700 nm. The upper limit of the dichroic ratio may be, for example, 20 or less, 18 or less, 16 or less, or 14 or less or so.

The content of the dichroic dye in the liquid crystal region may be appropriately selected in consideration of the purpose of the present application. For example, the content of the dichroic dye in the liquid crystal region may be 0.2 wt% or more. The content of the dichroic dye may specifically be 0.5 wt% or more, 1 wt% or more, 2 wt% or more, or 3 wt% or more. The upper limit of the content of the dichroic dye may be, for example, 10 wt% or less, 9 wt% or less, 8 wt% or less, 6 wt% or less, or 5 wt% or less. When the content of the dichroic dye in the liquid crystal region is too small, it may be difficult to express the desired transmittance variable characteristics, and when the content of the dichroic dye in the liquid crystal region is too large, there is a risk of precipitation. Therefore, it may be advantageous that the content of the dichroic dye is within the above range.

The upper substrate may further comprise a first electrode layer (302) between the first base material layer (301) and the pressure-sensitive adhesive layer (303). The first electrode layer (302) may contact the inner side surface of the first base material layer (301). The pressure-sensitive adhesive layer (303) may contact the inner side surface of the first electrode layer (302). The lower substrate of the liquid crystal cell may further comprise a second electrode layer (102) between the second base material layer (101) and the spacer (103). The second electrode layer (102) may contact the inner side surface of the second base material layer (101). The spacer (103) may contact the inner side surface of the second electrode layer (102).

The first electrode layer and the second electrode layer may serve to provide application of an external action, for example, an electric field, so that the material included in the liquid crystal region transmits or blocks incident light. In one example, the first electrode layer and/or the second electrode layer may comprise a conductive polymer, a conductive metal, a conductive nanowire, or a metal oxide such as ITO (indium tin oxide), and the like, but is not limited thereto. The first electrode layer and/or second electrode layer may be formed by, for example, depositing the conductive polymer, the conductive metal, the conductive nanowire, or the metal oxide such as ITO (indium tin oxide).

In this specification, the combination of the first base material layer, the first electrode layer and the pressure-sensitive adhesive layer may be referred to as the upper substrate, and the combination of the second base material layer, the second electrode layer, the spacer and the alignment film may be referred to as the lower substrate. The lower substrate may further comprise an undercoating layer. In the liquid crystal cell, the upper substrate may not comprise a separate alignment film other than the pressure-sensitive adhesive layer, and the lower substrate may comprise the alignment film. In the liquid crystal cell, the alignment film may contact the liquid crystal layer.

The optical device may further comprise a polarizer. In one example, the optical device may further comprise a first polarizer disposed on the outer side of the upper substrate and a second polarizer disposed on the outer side of the lower substrate. The first polarizer may be attached to the outer side surface of the upper substrate, and the second polarizer may be attached to the outer side surface of the lower substrate. For attachment of the substrate and the polarizer, a known adhesive layer used in the manufacture of an optical device may be applied thereto.

Each liquid crystal region may exist in the inner sides of the upper substrate and the lower substrate.

In this specification, the term polarizer means a film, sheet or element having a polarization function. The polarizer is a functional element capable of extracting light vibrating in one direction from incident light vibrating in multiple directions.

The first polarizer and the second polarizer may each be an absorption type polarizer or a reflection type polarizer. In this specification, the absorption type polarizer means an element showing selective transmission and absorption characteristics with respect to incident light. The absorption type polarizer may transmit, for example, light vibrating in any one direction from incident light vibrating in multiple directions, and may absorb light vibrating in the other directions. In this specification, the reflection type polarizer means an element showing selective transmission and reflection characteristics with respect to incident light. The reflection type polarizer may transmit, for example, light vibrating in any one direction from incident light vibrating in multiple directions, and may reflect light vibrating in the other directions.

As the absorption type polarizer, for example, a polarizing layer in which iodine is dyed on a polymer stretched film such as a PVA (poly(vinyl alcohol)) stretched film, or a guest-host type polarizing layer that liquid crystals polymerized in an oriented state are used as a host, and dichroic dyes arranged according to the orientation of the liquid crystals are used as a guest may be used, but it is not limited thereto.

As the reflection type polarizer, for example, a reflective polarizing layer known as a so-called DBEF (Dual Brightness Enhancement Film), or a reflective polarizing layer formed by coating a liquid crystal compound such as LLC (Lyotropic liquid crystal) may be used, but it is not limited thereto.

The polarizer may be a linear polarizer. In this specification, the linear polarizer means a case in which the selectively transmitted light is linearly polarized light vibrating in any one direction, and the selectively absorbed or reflected light is linearly polarized light vibrating in a direction perpendicular to the vibration direction of the linearly polarized light. In the case of the absorption type linear polarizer, the light transmission axis and the light absorption axis may be perpendicular to each other. In the case of the reflection type linear polarizer, the light transmission axis and the light reflection axis may be perpendicular to each other.

The first polarizer and the second polarizer may each have transmittance for light with a wavelength of 550 nm in a range of 40% to 50%. The transmittance may mean single transmittance of the polarizer for light with a wavelength of 550 nm. The single transmittance of the polarizer may be measured using, for example, a spectrometer (V7100, manufactured by Jasco). For example, after air is set as the base line in a state where the polarizer sample (without upper and lower protective films) is mounted on the device, and each transmittance is measured in a state where the axis of the polarizer sample is aligned vertically and horizontally with the axis of the reference polarizer, the single transmittance can be calculated.

The light transmission axis of the first polarizer and the light transmission axis of the second polarizer may be perpendicular to each other. Specifically, the angle formed by the light transmission axis of the first polarizer and the light transmission axis of the second polarizer may be in a range of 80 degrees to 100 degrees or 85 degrees to 95 degrees, or may be about 90 degrees. In the case of using the substrate for an optical device of the present application, when the light transmission axis of the first polarizer and the light transmission axis of the second polarizer are perpendicular to each other, it may be effective in suppressing the light leakage phenomenon caused by the misalignment of the orientation direction of the liquid crystals and the polarization direction of the polarizer.

The optical device may further comprise various functional layers as needed. The functional layer may be exemplified, for example, by a protective film of the polarizer, an antireflection film, a phase difference film, a hard coating layer, an antifouling layer, and the like, but is not limited thereto.

The optical device may be a transmittance-variable device. The transmittance-variable device can switch between at least two states of different transmittance. In one example, the transmittance-variable device may be a device capable of switching between a transparent and black mode states.

The transmittance-variable device in the transparent mode state may have a transmittance of at least 10% or more, 15% or more, 20% or more, 25% or more, 30% or more, 35% or more, 40% or more, 45% or more, 50% or more, 55 % or more, 60% or more, 65% or more, 70% or more, 75% or more, or 80% or more or so. In another example, the transmittance in the transparent mode may also be 100% or less, 95% or less, 90% or less, or 85% or less or so. However, the higher the transmittance in the transmission mode, it is more advantageous, so that the upper limit is not particularly limited.

In the black mode state, the transmittance of the transmittance-variable device may be 60% or less, 55% or less, 50% or less, 45% or less, 40% or less, 35% or less, 30% or less, 25% or less, 20% or less, 15% or less, 10% or less or 5% or less. In another example, the transmittance in the black mode may also be 0% or more, 5% or more, 10% or more, 15% or more, 20% or more, or 25% or more or so. However, the lower the transmittance in the black mode, it is more advantageous, so that the lower limit of the transmittance in the black mode state is not particularly limited.

The transmittance may be, for example, straight light transmittance. The straight light transmittance is the percentage of the ratio of the light transmitted in the same direction as the incident direction to the light incident on the device. For example, if the device is in the form of a film or sheet, the transmittance can be defined as the percentage of light transmitted through the device in a direction parallel to the normal direction among light incident in a direction parallel to the normal direction of the surface of the film or sheet.

The transmittance may be the transmittance for any one wavelength in the visible light region, for example, the range of about 400 to 700 nm or about 380 to 780 nm, or the transmittance for the entire visible light region, the maximum or minimum transmittance among the transmittance for the entire visible light region, or the average value of transmittance in the visible light region.

The optical device can be used for various applications, and for example, can be used for eyewear such as sunglasses or AR (augmented reality) or VR (virtual reality) eyewear, an outer wall of a building or a sunroof for a vehicle, and the like. In one example, the optical device itself may be a sunroof for a vehicle. For example, in an automobile including an auto body in which at least one opening is formed, the optical device may be mounted as a sunroof in the opening to be used, or a sunroof comprising the optical device may be mounted to be used.

[Effects of Invention]

The present application relates to a substrate for an optical device. The present application can provide a substrate for an optical device maintaining a cell gap between an upper substrate and a lower substrate of a liquid crystal cell appropriately, having excellent attachment force between the upper substrate and the lower substrate, and having excellent visibility by improving a sparkling phenomenon and a rainbow phenomenon.

[Brief Description of Drawings]

Figure 1 exemplarily shows a substrate for an optical device of the present application.

Figure 2 exemplarily shows a substrate for an optical device of the present application.

Figure 3 exemplarily shows a substrate for an optical device of the present application.

Figure 4 exemplarily shows a liquid crystal cell comprising the substrate for an optical device of Figure 1.

Figure 5 exemplarily shows a liquid crystal cell comprising the substrate for an optical device of Figure 2.

Figure 6 exemplarily shows a liquid crystal cell comprising the substrate for an optical device of Figure 3.

Figure 7 is images observing sparkling and rainbow phenomena of Examples and Comparative Examples.

Figure 8 exemplarily shows a substrate for an optical device of Comparative Examples.

[Mode for Invention]

Hereinafter, the present application will be specifically described through examples, but the scope of the present application is not limited by the following examples.

**Measurement Example 1. Measurement of inclination angle**

An inclination angle was measured by a cross-sectional analysis using a FE-SEM (Field Emission Scanning Electron Microscope). For the FE-SEM cross-sectional analysis, a specimen cut to a size of width $\times$ length = 20mm $\times$ 20mm was prepared as a measuring object. The cross-sectional analysis of FE-SEM was performed on the specimen, and the analysis conditions were as follows: Accelerating Voltage: 5 kV; Beam Intensity: 10; Magnification: $\times$5000. From the FE-SEM analysis image, the angle was measured only within a region where the slope angle was constant from the upper surface of the measuring object.

**Example 1**

**Manufacture of upper substrate**

An OCA type pressure-sensitive adhesive resin (KR3700, ShinEtsu) was mixed in a toluene solvent so that its solid content had a concentration of 25 wt%, and 15 parts by weight of a crosslinking agent (tetrakis(dimethylsiloxy)silane, Gelest) and 1 part by weight of a platinum catalyst (CAT-PL-56, ShinEtsu) were added thereto relative to 100 parts by weight of the pressure-sensitive adhesive resin to prepare a pressure-sensitive adhesive composition. The pressure-sensitive adhesive composition was bar-coated on a fluorine release film (FSC6, Nippa), and then heated at a temperature of 140°C for 6 minutes to form a pressure-sensitive adhesive layer having a final thickness of about 10$\mu$m. The pressure-sensitive adhesive layer was laminated on an ITO layer of a PET-ITO film to manufacture an upper substrate. The PET-ITO film is a film in which an ITO (Indium Tin Oxide) layer is deposited with a thickness of about 30 nm on a highly stretchable PET (polyethylene terephtalate) film (OCF, SKC), which has a size of width $\times$ length = 300mm $\times$ 300mm and a total thickness of about 145$\mu$m. The manufactured upper substrate has a structure in which the PET film/ITO layer/pressure-sensitive adhesive layer/release film are laminated in this order.

**Manufacture of lower substrate**

An acrylic resin composition (KAD-03, MINUTA Tech) was coated on the ITO layer of the same PET-ITO film used in the upper substrate, and then a partition wall spacer having an inclination angle of about 85 degrees was formed by a photolithography method. The partition wall spacer has a random pattern obtained by randomizing a regular hexagonal pattern (honeycomb pattern) with a spacing of about 350$\mu$m between two opposing sides. The height of the partition wall in the partition wall spacer was about 6$\mu$m, and the line width of the partition wall (based on the upper surface of the partition wall) was about 15$\mu$m. Subsequently, a vertical alignment film (5661LB3, Nissan) was coated so that the lower region between the partition walls had a thickness of about 400 nm, and then subjected to rubbing treatment in one direction with a rubbing cloth, thereby manufacturing a lower substrate. The thickness of the upper region of the vertical alignment film (the distance from the upper surface a1 of the vertical alignment film to the upper surface b1 of the spacer) on the partition wall spacer was about 80 nm, and the inclination angle of the vertical alignment film was about 45 degrees.

**Manufacture of liquid crystal cell**

The fluorine release film was peeled off from the upper substrate. A liquid crystal composition was coated on the alignment film of the lower substrate, and then laminated with the upper substrate to manufacture a liquid crystal cell. The liquid crystal composition is a mixture of a liquid crystal compound (SHN-7002XX T12, JNC) having refractive index anisotropy ($\Delta$n) of 0.094 and negative dielectric anisotropy, and a chiral dopant (S811, Merck). The manufactured liquid crystal cell is a reverse TN mode liquid crystal cell having a cell gap of 6$\mu$m and a chiral pitch of 20$\mu$m.

**Example 2**

A liquid crystal cell was manufactured in the same method as in Example 1, except that the lower substrate was manufactured as follows. First, a partition wall spacer was formed on the ITO layer of the PET-ITO film in the same method as in Example 1. Subsequently, a vertical alignment film (5661LB3, Nissan) was coated so that the thickness of the lower region between the partition walls was about 800 nm, and then subjected to rubbing treatment in one direction with a rubbing cloth to manufacture the lower substrate. The thickness of the upper region of the vertical alignment film on the partition wall spacer was about 150 nm, and the inclination angle of the vertical alignment film was about 15 degrees.

**Example 3**

A liquid crystal cell was manufactured in the same method as in Example 1, except that the lower substrate was manufactured as follows. First, a partition wall spacer was formed on the ITO layer of the PET-ITO film in the same method as in Example 1. Subsequently, an undercoating layer was formed so that the thickness of the lower region between the partition walls was about 400 nm. The undercoating layer was formed by coating a UV-curable acrylic resin composition thereon, and then irradiating it with UV-A ultraviolet rays at 400 mJ/cm$^2$ to be cured. The UV-curable acrylic resin composition comprises 8.7 wt% of tricyclodecane dimethanol diacrylate (MIRAMER M262, MIWON), 2.9 wt% of an acrylate mixture (product number: 246794, Sigma-Aldrich), 2.9 wt% of pentaerythritol tetrakis(3-mercaptobutylate) (KarenzMT™PE1, Resonac), and 0.4 wt% of an initiator (Irgacure127, BASF) as solid contents, and PGME (Propylene Glycol Monomethyl Ether) as the remaining solvent. The acrylate mixture is a mixture of pentaerythritol tetraacrylate, pentaerythritol triacrylate, and trimethylolpropane triacrylate. The thickness of the upper region on the partition wall spacer of the undercoating layer (the distance from the upper surface c1 of the undercoating layer to the upper surface b1 of the spacer) was about 160 nm, and the inclination angle (the inclination angle of the undercoating layer) after the formation of the undercoating layer was about 51 degrees. Subsequently, a vertical alignment film (5661LB3, Nissan) was coated so that the thickness of the lower region between the partition walls was about 100 nm, and then subjected to rubbing treatment in one direction with a rubbing cloth to manufacture the lower substrate. The thickness of the upper region on the partition wall spacer of the vertical alignment film was about 20 nm, and the inclination angle of the vertical alignment film was about 41 degrees.

**Example 4**

A liquid crystal cell was manufactured in the same method as in Example 1, except that the lower substrate was manufactured as follows. First, a partition wall spacer was formed on the ITO layer of the PET-ITO film in the same method as in Example 1. Subsequently, an undercoating layer was formed so that the thickness of the lower region between the partition walls was about 800 nm. The undercoating layer was formed by coating a UV-curable acrylic resin composition, and then irradiating it with UV-A ultraviolet rays at 400 mJ/cm$^2$ to be cured. The UV-curable acrylic resin composition was the same as that used in Example 3. The thickness of the upper region on the partition wall spacer of the undercoating layer was about 300 nm, and the inclination angle (inclination angle of the undercoating layer) after the formation of the undercoating layer was about 25 degrees. Subsequently, a vertical alignment film (5661LB3, Nissan) was coated so that the thickness of the lower region between the partition walls was about 100 nm, and then subjected to rubbing treatment in one direction with a rubbing cloth to manufacture the lower substrate. The thickness of the upper region on the partition wall spacer of the vertical alignment film was about 20 nm, and the inclination angle of the vertical alignment film was about 13 degrees.

**Example 5**

A liquid crystal cell was manufactured in the same method as in Example 1, except that the lower substrate was manufactured as follows. First, a partition wall spacer was formed on the ITO layer of the PET-ITO film in the same method as in Example 1. Subsequently, an undercoating layer was formed so that the thickness of the lower region between the partition walls was about 800 nm. The undercoating layer was formed by coating a UV-curable acrylic resin composition, and then irradiating it with UV-A ultraviolet rays at 400 mJ/cm$^2$ to be cured. The UV-curable acrylic resin composition was the same as that used in Example 3. The thickness of the upper region on the partition wall spacer of the undercoating layer was about 300 nm, and the inclination angle (inclination angle of the undercoating layer) after the formation of the undercoating layer was about 25 degrees. Subsequently, a vertical alignment film (5661LB3, Nissan) was coated so that the thickness of the lower region between the partition walls was about 300 nm, and then subjected to rubbing treatment in one direction with a rubbing cloth to manufacture the lower substrate. The thickness of the upper region on the partition wall spacer of the vertical alignment film was about 60 nm, and the inclination angle of the vertical alignment film was about 6 degrees.

**Example 6**

A liquid crystal cell was manufactured in the same method as in Example 1, except that the lower substrate was manufactured as follows. First, an acrylic resin composition (KAD-03, MINUTA Tech) was coated on the ITO layer of the same PET-ITO film as that used in the upper substrate of Example 1, and then a partition wall spacer having an inclination angle of about 50 degrees was formed by a photolithography method. The partition wall spacer has a random pattern obtained by randomizing a regular hexagonal pattern (honeycomb pattern) with a gap of about 350μm between two opposing sides. The height of the partition wall of the partition wall spacer was about 6μm, and the line width of the partition wall (based on the upper surface of the partition wall) was about 15μm. Subsequently, a vertical alignment film (5661LB3, Nissan) was coated so that the thickness of the lower region between the partition walls was about 100 nm, and then subjected to rubbing treatment in one direction with a rubbing cloth to manufacture the lower substrate. The thickness of the upper region on the partition wall spacer of the vertical alignment film was about 20 nm, and the inclination angle of the vertical alignment film was about 41 degrees.

**Example 7**

A liquid crystal cell was manufactured in the same method as in Example 1, except that the lower substrate was manufactured as follows. First, a partition wall spacer was formed on the ITO layer of the PET-ITO film in the same method as in Example 1. Subsequently, an undercoating layer was formed so that the thickness of the lower region between the partition walls was about 800 nm. The undercoating layer was formed by coating a UV-curable acrylic resin composition, and then irradiating it with UV-A ultraviolet rays at 400 mJ/cm$^2$ to be cured. The UV-curable acrylic resin composition comprises 8.7 wt% of tricyclodecane dimethanol diacrylate (MIRAMER M262, MIWON), 2.9 wt% of an acrylate mixture (product number: 246794, Sigma-Aldrich), 2.9 wt% of pentaerythritol tetrakis(3-mercaptobutylate) (KarenzMT™PEI1, Resonac), and 0.4 wt% of an initiator (Irgacure127, BASF) as solid contents, and PGME (Propylene Glycol Monomethyl Ether) as the remaining solvent, and further comprises Lactam Black (SML-333, SCK) as a black dye so that the weight ratio of the solid contents to the black dye is 9: 1. The thickness of the upper region on the partition wall spacer of the undercoating layer was about 300 nm, and the inclination angle (inclination angle of the undercoating layer) after the formation of the undercoating layer was about 25 degrees. Subsequently, a vertical alignment film (5661LB3, Nissan) was coated so that the thickness of the lower region between the partition walls was about 100 nm, and then subjected to rubbing treatment in one direction with a rubbing cloth to manufacture the lower substrate. The thickness of the upper region on the partition wall spacer of the vertical alignment film was about 20 nm, and the inclination angle of the vertical alignment film was about 13 degrees.

**Example 8**

A liquid crystal cell was manufactured in the same method as in Example 1, except that the lower substrate was manufactured as follows. First, a partition wall spacer was formed on the ITO layer of the PET-ITO film in the same method as in Example 1. Subsequently, an undercoating layer was formed so that the thickness of the lower region between the partition walls was about 800 nm. The undercoating layer was formed by coating a UV-curable acrylic resin composition, and then irradiating it with UV-A ultraviolet rays at 400 mJ/cm$^2$ to be cured. The UV-curable acrylic resin composition comprises 8.7 wt% of tricyclodecane dimethanol diacrylate (MIRAMER M262, MIWON), 2.9 wt% of AE47K, 2.9 wt% of pentaerythritol tetrakis(3-mercaptobutylate) (KarenzMT™PE1, Resonac), and 0.4 wt% of an initiator (Irgacure127, BASF) as solid contents, and PGME (Propylene Glycol Monomethyl Ether) as the remaining solvent, and further comprises Lactam Black (SML-333, SCK) as a black dye so that the weight ratio of the solid contents to the black dye is about 6:4. The thickness of the upper region on the partition wall spacer of the undercoating layer was about 300 nm, and the inclination angle (inclination angle of the undercoating layer) after the formation of the undercoating layer was about 25 degrees. Subsequently, a vertical alignment film (5661LB3, Nissan) was coated so that the thickness of the lower region between the partition walls was about 100 nm, and then subjected to rubbing treatment in one direction with a rubbing cloth to manufacture the lower substrate. The thickness of the upper region on the partition wall spacer of the vertical alignment film was about 20 nm, and the inclination angle of the vertical alignment film was about 13 degrees.

**Comparative Example 1**

A liquid crystal cell was manufactured in the same method as in Example 1, except that the lower substrate was manufactured as follows. First, a partition wall spacer was formed on the ITO layer of the PET-ITO film in the same method as in Example 1. Subsequently, a vertical alignment film (5661LB3, Nissan) was coated so that the thickness of the lower region between the partition walls was about 100 nm, and then subjected to rubbing treatment in one direction with a rubbing cloth to manufacture the lower substrate. The thickness of the upper region on the partition wall spacer of the vertical alignment film was about 20 nm, and the inclination angle of the vertical alignment film was about 68 degrees.

## Comparative Example 2

A liquid crystal cell was manufactured in the same method as in Example 1, except that the lower substrate was manufactured as follows. First, a partition wall spacer was formed on the ITO layer of the PET-ITO film in the same method as in Example 1. Subsequently, a vertical alignment film (5661LB3, Nissan) was coated so that the thickness of the lower region between the partition walls was about 300 nm, and then subjected to rubbing treatment in one direction with a rubbing cloth to manufacture the lower substrate. The thickness of the upper region on the partition wall spacer of the vertical alignment film was about 60 nm, and the inclination angle of the vertical alignment film was about 51 degrees.

## Comparative Example 3

A liquid crystal cell was manufactured in the same method as in Example 1, except that the lower substrate was manufactured as follows. First, a partition wall spacer was formed on the ITO layer of the PET-ITO film in the same method as in Example 1. Subsequently, an undercoating layer was formed so that the thickness of the lower region between the partition walls was about 200 nm. The undercoating layer was formed by coating a UV-curable acrylic resin composition, and then irradiating UV-A ultraviolet rays at 400 mJ/cm$^2$ to be cured. The UV-curable acrylic resin composition was the same as that used in Example 3. The thickness of the upper region on the partition wall spacer of the undercoating layer was about 80 nm, and the inclination angle (inclination angle of the undercoating layer) after the formation of the undercoating layer was about 60 degrees. Subsequently, a vertical alignment film (5661LB3, Nissan) was coated so that the thickness of the lower region between the partition walls was about 100 nm, and then subjected to rubbing treatment in one direction with a rubbing cloth to manufacture the lower substrate. The thickness of the upper region on the partition wall spacer of the vertical alignment film was about 20 nm, and the inclination angle of the vertical alignment film was about 49 degrees.

## Evaluation Example 1. Sparkling and Rainbow Evaluation

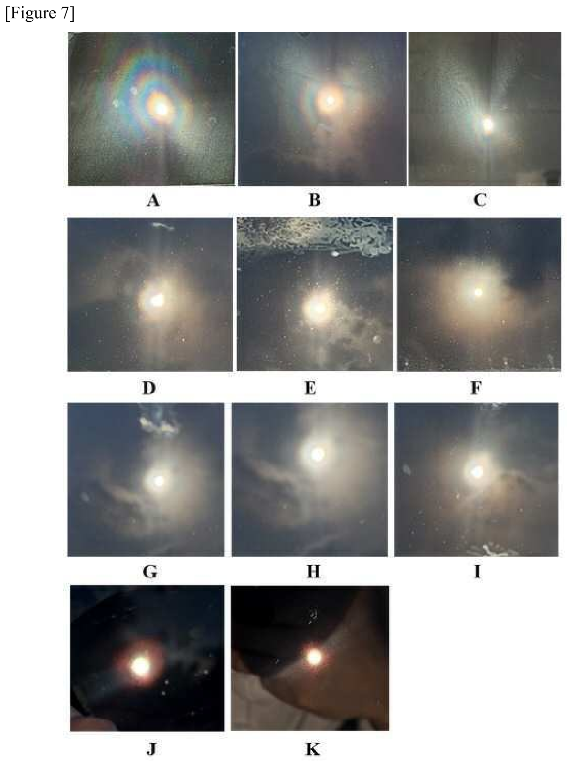

An optical device was manufactured by attaching a first polarizer to one side of the liquid crystal cell manufactured in each of Examples and Comparative Examples and attaching a second polarizer to the other side of the liquid crystal cell. As each of the first polarizer and the second polarizer, a polyvinyl alcohol-based stretched film dyed with iodine was used. The transmission axes of the first polarizer and the second polarizer were attached to form about 90 degrees. While observing the optical device with respect to sunlight (in the order of the sunlight, the optical device, and an observer), it was confirmed whether the sparkling phenomenon and the rainbow phenomenon were observed. The sparkling phenomenon and the rainbow phenomenon can be observed with the naked eye, and Figure 7 is images of the sparkling phenomenon and the rainbow phenomenon (A to C: Comparative Examples 1 to 3, D to K: Examples 1 to 8). The sparkling phenomenon and the rainbow phenomenon were observed in Comparative Examples 1 to 3, whereas the sparkling phenomenon and the rainbow phenomenon were not observed in Examples 1 to 8. The rainbow phenomenon was observed as circular rainbows, and the sparkling phenomenon was observed to be hazy due to glittering. Since the main cause of the rainbow is sparkling, it can be determined that if the rainbow is strong, the sparkling is also strong.

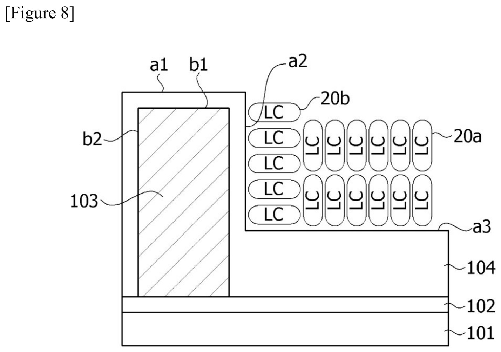

In the case of Examples 1 to 8, as shown in Figures 1 to 3, the liquid crystals (20a) on the lower surface (a3) of the alignment film are vertically oriented with respect to the base material layer (101) normally, and the liquid crystals (20b) on the side surface (a2) of the alignment film are obliquely oriented due to the inclination angle of the alignment film, so that it does not affect the polarization direction of the polarizer, and thus the sparkling and rainbow phenomena are not induced. On the other hand, in the case of Comparative Examples 1 to 3, as shown in Figure 8, both the liquid crystals (20a) on the lower surface (a3) of the alignment film and the liquid crystals (20b) on the side surface (a2) of the alignment film are vertically oriented, where the optical axis of the liquid crystals (20b) vertically oriented on the side surface (a2) of the alignment film becomes horizontal with respect to the base material layer (101), and simultaneously affects the polarization direction of the polarizer, whereby it seems that the sparkling and rainbow phenomena are induced.

[Explanation of Reference Numerals]

101: base material layer (second base material layer), 102: electrode layer (second electrode layer), 103: spacer, 104: alignment film, 105: undercoating layer, a1: upper surface of alignment film, a2: side surface (inclined surface) of alignment film, a3: lower surface of alignment film, b1: upper surface of spacer, b2: side surface (inclined surface) of spacer, c1: upper surface of undercoating layer, c2: side surface (inclined surface) of undercoating layer, c3: lower surface of undercoating layer, $\theta$a: inclination angle of alignment film, $\theta$b: inclination angle of spacer, $\theta$c: inclination angle of undercoating layer, 301: first base material layer, 302: first electrode layer, 303: pressure-sensitive adhesive layer, 200: liquid crystal layer

**Claims**

1. A substate for an optical device comprising a base material layer, a spacer, and an alignment film, wherein the surface of the alignment film comprises an upper surface, a lower surface, and an inclined surface between the upper surface and the lower surface, and an inclination angle formed by the upper surface of the alignment film and the inclined surface of the alignment film is 47 degrees or less.

2. The substrate for an optical device according to claim 1, wherein the spacer is a partition wall-shaped spacer.

3. The substrate for an optical device according to claim 1, wherein the surface of the spacer comprises an upper surface and a side surface connected to the upper surface, and an angle formed by the upper surface and the side surface of the spacer is within a range of 30 to 90 degrees.

4. The substrate for an optical device according to claim 1, wherein the spacer is present between the base material layer and the alignment film.

5. The substrate for an optical device according to claim 1, further comprising an undercoating layer present between the spacer and the alignment film.

6. The substrate for an optical device according to claim 5, wherein the undercoating layer comprises a cured product of a curable resin.

7. The substrate for an optical device according to claim 5, wherein the surface of the undercoating layer comprises an upper surface, a lower surface, and an inclined surface between the upper surface and the lower surface, and an angle formed by the upper surface and the inclined surface of the undercoating layer is within a range of 5 degrees to 60 degrees.

8. An optical device comprising a liquid crystal cell including an upper substrate including a first base material layer and a pressure-sensitive adhesive layer; a lower substrate including a second base material layer, a spacer, and an alignment film, wherein the surface of the alignment film comprises an upper surface, a lower surface, and an inclined surface between the upper surface and the lower surface, and an inclination angle formed by the upper surface and the inclined surface of the alignment film is 47 degrees or less; and a liquid crystal compound present between the upper substrate and the lower substrate.

9. The optical device according to claim 8, wherein the spacer is a partition wall-shaped spacer, and the liquid crystal compound exists in a region partitioned by the partition wall.

10. The optical device according to claim 8, wherein when the liquid crystal compound exists in a vertical orientational state, both the vertical orientational state with respect to the inclined surface of the alignment film and the vertical orientational state with respect to the lower surface of the alignment film are implemented.

11. The optical device according to claim 8, wherein the liquid crystal cell further comprises a first electrode layer existing between the first base material layer and the pressure-sensitive adhesive layer of the upper substrate, and the lower substrate further comprises a second electrode layer existing between the second base material layer and the spacer.

12. The optical device according to claim 8, further comprising a first polarizer disposed on the outer side of the upper substrate and a second polarizer disposed on the outer side of

[Figure 1]

[Figure 2]

[Figure 3]

[Figure 4]

[Figure 5]

[Figure 6]

[Figure 7]

A   B   C

D   E   F

G   H   I

J   K

[Figure 8]

## INTERNATIONAL SEARCH REPORT

| International application No. |
|---|
| **PCT/KR2024/013770** |

**A. CLASSIFICATION OF SUBJECT MATTER**

**G02F 1/1339**(2006.01)i; **G02F 1/1337**(2006.01)i; **G02F 1/1343**(2006.01)i; **G02F 1/1335**(2006.01)i

According to International Patent Classification (IPC) or to both national classification and IPC

**B. FIELDS SEARCHED**

Minimum documentation searched (classification system followed by classification symbols)

G02F 1/1339(2006.01); C08G 73/10(2006.01); E06B 9/24(2006.01); G02F 1/13(2006.01); G02F 1/1333(2006.01); G02F 1/1335(2006.01); G02F 1/1337(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 액정(liquid crystal), 기판(substrate), 배향막(alignment layer), 스페이서 (spacer), 경사(slope), 언더코팅(undercoating), 수직(vertical), 편광판(polarizing plate)

**C. DOCUMENTS CONSIDERED TO BE RELEVANT**

| Category* | Citation of document, with indication, where appropriate, of the relevant passages | Relevant to claim No. |
|---|---|---|
| X | JP 2017-062362 A (DAINIPPON PRINTING CO., LTD.) 30 March 2017 (2017-03-30)<br>See paragraphs [0012], [0014], [0025], [0027], [0032]-[0033], [0037] and [0044]; and figures 1 and 3. | 1-4,8-12 |
| Y | | 5-7 |
| Y | KR 10-2023-0003437 A (DAI NIPPON PRINTING CO., LTD.) 05 January 2023 (2023-01-05)<br>See paragraphs [0020], [0049] and [0069]; and figure 8. | 5-7 |
| A | KR 10-2016-0050422 A (LG DISPLAY CO., LTD.) 11 May 2016 (2016-05-11)<br>See paragraphs [0062]-[0120]; and figures 4a-5l. | 1-12 |
| A | JP 2015-018065 A (JAPAN DISPLAY INC.) 29 January 2015 (2015-01-29)<br>See paragraphs [0032]-[0033]; and figures 1A-1C. | 1-12 |
| A | KR 10-2022-0007334 A (LG CHEM, LTD.) 18 January 2022 (2022-01-18)<br>See paragraphs [0040]-[0082]; and figure 2. | 1-12 |

☐ Further documents are listed in the continuation of Box C.   ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **24 December 2024** | **24 December 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

| International application No. |
| --- |
| **PCT/KR2024/013770** |

| Patent document cited in search report | | | Publication date (day/month/year) | Patent family member(s) | | | Publication date (day/month/year) |
| --- | --- | --- | --- | --- | --- | --- | --- |
| JP | 2017-062362 | A | 30 March 2017 | None | | | |
| KR | 10-2023-0003437 | A | 05 January 2023 | CN | 108351559 | A | 31 July 2018 |
| | | | | CN | 108351559 | B | 26 April 2022 |
| | | | | EP | 3358400 | A1 | 08 August 2018 |
| | | | | EP | 3358400 | A4 | 15 May 2019 |
| | | | | EP | 3358400 | B1 | 02 December 2020 |
| | | | | EP | 3798721 | A1 | 31 March 2021 |
| | | | | EP | 3798721 | B1 | 20 November 2024 |
| | | | | KR | 10-2018-0059445 | A | 04 June 2018 |
| | | | | KR | 10-2024-0023693 | A | 22 February 2024 |
| | | | | KR | 10-2481355 | B1 | 27 December 2022 |
| | | | | KR | 10-2636600 | B1 | 15 February 2024 |
| | | | | KR | 10-2659184 | B1 | 22 April 2024 |
| | | | | US | 10649281 | B2 | 12 May 2020 |
| | | | | US | 10684515 | B2 | 16 June 2020 |
| | | | | US | 2018-0284514 | A1 | 04 October 2018 |
| | | | | WO | 2017-057619 | A1 | 06 April 2017 |
| KR | 10-2016-0050422 | A | 11 May 2016 | KR | 10-2200338 | B1 | 07 January 2021 |
| JP | 2015-018065 | A | 29 January 2015 | US | 2015-0015840 | A1 | 15 January 2015 |
| KR | 10-2022-0007334 | A | 18 January 2022 | None | | | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• KR 1020230120917

**Non-patent literature cited in the description**

• Bonding of Two Plastic Substrates for Flexible LCDs. *SID Symposium Digest*, 2007, vol. 38, 653-656

• **D. PODOLSKYY et al.** Simple method for accurate measurements of the cholesteric pitch using a ''stripe-wedge'' Grandjean-Cano cell. *Liquid Crystals*, July 2008, vol. 35 (7), 789-791